# DEMANDE DE BREVET EUROPEEN

(11) **EP 2 174 911 A1**
(43) Date de publication de la demande: **14.04.2010**
(21) Numéro de dépôt: 09290731.0
(22) Date de dépôt: 25.09.2009
(51) Int. Cl.: C01B 39/04, C01B 39/36, C01B 39/38, C01B 39/40, B01J 29/00, B01J 29/06, B01J 29/70

(54) **Procédé de préparation d'une zéolithe de type structural MTW**

(30) Priorité: 07.10.2008 FR 0805538
(71) Demandeur: IFP, 92852 Rueil-Malmaison Cédex (FR)
(72) Inventeur: Fecant, Antoine, 69530 Brignais (FR); Bats, Nicolas, 69320 Feyzin (FR)

(57) **Abrégé**

On décrit un procédé de préparation d'une zéolithe de type structural MTW comprenant au moins les étapes suivantes :
i) le mélange, en milieu aqueux, d'au moins une source d'au moins un élément tétravalent et d'au moins une espèce organique azotée de formule : 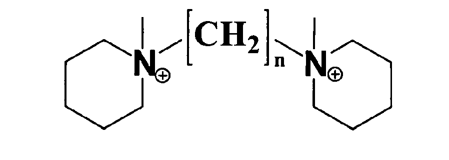 dans laquelle n représente le nombre de motif méthylène (CH₂) et est égal à 7, 8, 9 ou 10,
ii) le traitement hydrothermal dudit mélange jusqu'à ce que ladite zéolithe de type structural MTW se forme.

## Description

### Domaine technique

La présente invention se rapporte à un nouveau procédé de préparation d'une zéolithe de type structural MTW réalisé en présence d'une espèce structurante organique azotée comportant deux hétérocycles contenant chacun une fonction ammonium quaternaire. Ladite zéolithe de type structural MTW obtenue selon le procédé de l'invention trouve avantageusement son application en tant que catalyseur, adsorbant ou agent de séparation.

### Art antérieur

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.

Les zéolithes de type structural MTW sont décrites dans l'art antérieur (Ch. Baerlocher, W.M. Meier, D.H. Oison, Atlas of Zeolite Framework types, 5ème édition, 2001). Les zéolithes de type structural MTW comprennent en particulier la zéolithe ZSM-12, CHZ-5, NU-13, Theta-3. Les zéolithes de type structural MTW présente un système monodimensionnel de pores délimités par douze tétéraèdres et un diamètre de pore de 5,6 par 6 Angstrom. De nombreuses méthodes de synthèse de ces zéolithes, en particulier de la zéolithe ZSM-12, sont connues. Le cation tetraéthylammonium est largement utilisé comme agent structurant pour la synthèse de la zéolithe ZSM-12. On peut citer également l'utilisation des cations benzyltriméthylammonium, dibenzyldiméthylammonium ou triéthylméthylammonium comme agent structurant pour la préparation de cette zéolithe (R. Szostak, Molecular Sieves, 2d edition, Thomson Science (1998)).

### Résumé et intérêt de l'invention

La présente invention a pour objet un procédé de préparation d'une zéolithe de type structural MTW comprenant au moins les étapes suivantes :
i) le mélange, en milieu aqueux, d'au moins une source d'au moins un élément tétravalent X et d'au moins une espèce organique azotée de formule (I) indiquée ci-dessous : 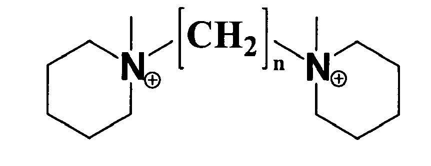 dans laquelle n représente le nombre de motif méthylène (CH₂) et est égal à 7, 8, 9 ou 10,
ii) le traitement hydrothermal dudit mélange jusqu'à ce que ladite zéolithe de type structural MTW se forme.

Il a été découvert que ladite espèce structurante organique azotée de formule (I) constituée de deux hétérocycles alkyles ayant 5 atomes de carbone, comportant chacun un cation ammonium quaternaire et séparé l'un de l'autre par une chaîne alkyle formée de motif -(CH₂)- ayant de 7 à 10 atomes de carbone, mise en mélange avec au moins une source d'au moins un élément tétravalent et de l'eau, conduit à la production d'une zéolithe de type structural MTW de haute pureté. Toute autre phase cristallisée ou amorphe est généralement et très préférentiellement absente du solide cristallisé zéolithique de type structural MTW obtenu à l'issue du procédé de l'invention. De plus, une telle zéolithe de type structural MTW, préparée par le procédé selon l'invention, est obtenue avec une très bonne cristallinité. La zéolithe de type structural MTW obtenue par le procédé de l'invention est obtenue avec une excellente sélectivité pour des compositions de gel très variées.

### Description de l'invention

La présente invention a pour objet un procédé de préparation d'une zéolithe de type structural MTW comprenant au moins les étapes suivantes :
i) le mélange, en milieu aqueux, d'au moins une source d'au moins un élément tétravalent X et d'au moins une espèce organique azotée de formule (I) indiquée ci-dessous : 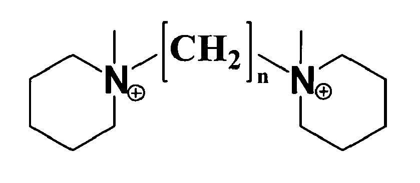 dans laquelle n représente le nombre de motif méthylène (CH₂) et est égal à 7, 8, 9 ou 10,
ii) le traitement hydrothermal dudit mélange jusqu'à ce que ladite zéolithe de type structural MTW se forme.

Conformément à l'invention, ladite espèce organique azotée de formule (I) joue le rôle de structurant de la zéolithe de type structural MTW préparée selon le procédé de l'invention. Elle est constituée de deux hétérocycles alkyles ayant 5 atomes de carbone, chacun desdits hétérocycles comportant un cation ammonium quaternaire et étant séparés l'un de l'autre par une chaîne alkyle formée de motif -(CH₂)- ayant de 7 à 10 atomes de carbone. De façon avantageuse, ladite espèce organique azotée de formule (I) est choisie parmi le 1,10-bis(méthylpiperidinium)décane, le 1,9-bis(méthylpiperidinium)nonane et le 1,7-bis(méthylpiperidinium)heptane.
Ladite espèce organique azotée de formule (I) utilisée pour la mise en oeuvre de ladite étape (i) du procédé de l'invention est synthétisée par toute méthode connue de l'Homme du métier. De manière générale, on procède au mélange de N-méthylpipéridine et de 1,n-dihalogénoalcane selon un rapport stoechiométrique N-méthylpipéridine/1,n-dihalogénoalcane au moins égal à 2. Avantageusement, on procède au mélange d'une mole de 1,n-dihalogénoalcane (n étant défini tel que ci-dessus) et d'au moins 2 moles de N-méthylpipéridine. Par exemple, pour la synthèse du cation 1,10-bis(méthylpiperidinium)décane, on procède au mélange d'une mole de 1,10-dibromodecane et d'au moins 2 moles de N-méthylpiperidine. Généralement, le mélange formé d'au moins ladite espèce organique azotée et de 1-n,dihalogénoalcane est porté à reflux pendant une durée comprise entre 5 et 15 heures. Après filtration, précipitation au moyen d'un solvant éthéré tel que le diéthyéther puis recristallisation dans un mélange éthanol/éther, ladite espèce organique azotée de formule (I) est obtenue à l'état pir.
L'anion associé au cation ammonium quaternaire présent dans chacun des hétérocycles de l'espèce organique structurante azotée pour la synthèse de la zéolithe de type structural MTW est choisi parmi l'anion acétate, l'anion sulfate, l'anion carboxylate, l'anion tétrafluoroborate, les anions halogénures tels que le fluorure, le chlorure, le bromure, l'iodure, l'anion hydroxyde ou une combinaison de plusieurs d'entre eux. De manière préférée, l'anion associé au cation ammonium quaternaire présent dans chacun des hétérocycles de l'espèce organique structurante azotée pour la zéolithe de type structural MTW est l'anion hydroxyde ou l'anion bromure. Le dihydroxyde du sel de diammonium quaternaire est préférentiellement obtenu par traitement à température ambiante d'une solution aqueuse de dibromure du sel de diammonium quaternaire par de l'oxyde d'argent.

Conformément à l'invention, au moins une source d'au moins un élément tétravalent X est incorporée dans l'étape (i) du procédé de préparation. X est préférentiellement choisi parmi le silicium, le germanium, le titane et le mélange d'au moins deux de ces éléments tétravalents et très préférentiellement X est le silicium ou un mélange de silicium et de germanium. La ou les source(s) du(es)dit(s) élément(s) tétravalent(s) X peu(ven)t être tout composé comprenant l'élément X et pouvant libérer cet élément en solution aqueuse sous forme réactive. L'élément X peut être incorporé dans le mélange sous une forme oxydée XO₂ ou sous tout autre forme. Lorsque X est le titane, on utilise avantageusement Ti(EtO)₄ comme source de titane. Lorsque X est le germanium on utilise avantageusement GeO₂ amorphe comme source de germanium. Dans le cas préféré où X est le silicium, la source de silicium peut être l'une quelconque desdites sources couramment utilisées pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX.

Selon un premier mode préféré de réalisation du procédé de l'invention, au moins une source d'au moins un élément trivalent Y est incorporée dans le mélange pour la mise en oeuvre de ladite étape (i) du procédé de préparation selon l'invention. Ledit élément trivalent Y est préférentiellement choisi parmi l'aluminium, le bore, le fer, l'indium, le gallium ou le mélange d'au moins deux de ces éléments trivalents et très préférentiellement Y est l'aluminium. La ou les source(s) du(es)dit(s) élément(s) trivalent(s) Y peu(ven)t être tout composé comprenant l'élément Y et pouvant libérer cet élément en solution aqueuse sous forme réactive. L'élément Y peut être incorporé dans le mélange sous une forme oxydée YO_{b} avec 1 ≤ b ≤ 3 (b étant un nombre entier ou un nombre rationnel) ou sous toute autre forme. Dans le cas préféré où Y est l'aluminium, la source d'aluminium est de préférence de l'aluminate de sodium ou un sel d'aluminium, par exemple du chlorure, du nitrate, de l'hydroxyde
ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Selon un deuxième mode préféré de réalisation du procédé de l'invention, au moins un métal alcalin et/ou alcalino-terreux M est incorporé dans le mélange pour la mise en oeuvre de ladite étape (i) du procédé de préparation selon l'invention et est choisi parmi le lithium, le potassium, le sodium, le magnésium, le calcium et le mélange d'au moins deux de ces métaux. De préférence, ledit métal M est un métal alcalin et de manière très préférée il s'agit du sodium.

Selon un troisième mode préféré de réalisation du procédé de l'invention, l'anion fluorure F⁻ est incorporé dans le mélange pour la mise en oeuvre de ladite étape (i) du procédé de préparation selon l'invention. On utilise, comme source d'anion fluorure, un sel de fluorure tels que NH₄F, NaF, KF, LiF et le mélange d'au moins deux de ces sels ou l'acide fluorhydrique HF. De manière préférée, la source d'anion fluorure est l'acide fluorhydrique HF en solution aqueuse.

Les modes préférés de réalisation du procédé de l'invention décrits ci-dessus peuvent être réalisés simultanément ou indépendamment les uns des autres. En particulier, il est avantageux que ladite étape (i) du procédé de l'invention soit mise en oeuvre en présence d'une source d'un élément trivalent, de préférence l'aluminium, et d'un métal alcalin et/ou alcalino-terreux, de préférence le sodium. Il est également avantageux que ladite étape (i) du procédé de l'invention soit mise en oeuvre en présence d'une source d'un anion fluorure.

Conformément au procédé de préparation selon l'invention, le mélange réactionnel obtenu à l'étape (i) présente une composition molaire exprimée par la formule :

XO₂ : v YO_{b} : w M2_{/m}O : x F⁻ : y H₂O : z R⁺

- v étant compris entre 0 et 0,5, de préférence entre 0,001 et 0,3
- w étant compris entre 0 et 1, de préférence entre 0,05 et 0,5
- x étant compris entre 0 et 1, de préférence entre 0,1 et 0,8
- y étant compris entre 1 et 200, de préférence entre 10 et 100
- z étant compris entre 0,04 et 2, de préférence entre 0,06 et 1, et de manière très préférée entre 0,1 et 0,8,
- b étant compris entre 1 et 3, (b étant un nombre entier ou rationnel)
- m étant égal à 1 ou 2,
où X, Y et M ont la même définition que précédemment, à savoir X est un ou plusieurs élément(s) tétravalent(s) choisi(s) dans le groupe formé par les éléments suivants : silicium, germanium, titane, de manière très préféré X est le silicium ou un mélange de silicium et de germanium, où Y est un ou plusieurs élément(s) trivalent(s) choisi(s) dans le groupe formé par les éléments suivants : aluminium, fer, bore, indium et gallium, de manière très préférée Y est l'aluminium et où M est un ou plusieurs metal(aux) alcalin(s) et/ou alcalino-terreux choisi(s) parmi le lithium, le sodium, le potassium, le calcium, le magnésium et le mélange d'au moins deux de ces métaux, de manière très préférée M est le sodium, R⁺ est l'espèce organique cationique azotée de formule (I). v, w, x, y et z représentent respectivement le nombre de moles de YO_{b}, de M_{2/m}O, de F⁻, de H₂O et de R⁺.

L'étape (i) du procédé selon l'invention consiste à préparer un mélange réactionnel aqueux appelé gel et renfermant au moins une source d'au moins un élément tétravalent X, de préférence un oxyde XO₂, éventuellement au moins une source d'au moins un élément trivalent Y, de préférence un oxyde YO_{b}, au moins une espèce organique azotée de formule (I) constituée de deux hétérocycles alkyle comportant chacun un cation ammonium quaternaire, éventuellement au moins une source d'un ou plusieurs métal(aux) alcalin(s) et/ou alcalino-terreux et éventuellement au moins une source d'anion fluorure. Les quantités desdits réactifs sont ajustées de manière à conférer à ce gel une composition permettant sa cristallisation en une zéolithe de type structural MTW.

Il peut être avantageux d'additionner des germes au mélange réactionnel au cours de ladite étape (i) du procédé de l'invention afin de réduire le temps nécessaire à la formation des cristaux de zéolithe de type structural MTW et/ou la durée totale de cristallisation. Lesdits germes favorisent également la formation de ladite zéolithe de type structural MTW au détriment d'impuretés. De tels germes comprennent des solides cristallisés, notamment des cristaux de zéolithe de type structural MTW. Les germes cristallins sont généralement ajoutés dans une proportion comprise entre 0,01 et 10 % de la masse de la source de l'élément X, de préférence de l'oxyde XO₂, utilisée dans le mélange réactionnel.

Conformément à l'étape (ii) du procédé selon l'invention, le gel est soumis à un traitement hydrothermal, préférentiellement réalisé à une température comprise entre 80°C et 200°C, jusqu'à ce que ladite zéolithe de type structural MTW se forme. Le gel est avantageusement mis sous conditions hydrothermales sous une pression de réaction autogène, éventuellement en ajoutant du gaz, par exemple de l'azote, à une température comprise entre 80°C et 200°C, de préférence entre 140°C et 180°C, jusqu'à la formation des cristaux de zéolithe de type structural MTW. La durée nécessaire pour obtenir la cristallisation varie généralement entre 1 et 50 jours, de préférence entre 1 et 21 jours. La mise en réaction s'effectue généralement sous agitation ou en absence d'agitation, de préférence en présence d'agitation.

A la fin de la réaction, lorsque ladite zéolithe de type structural MTW est formée à la suite de la mise en oeuvre de ladite étape (ii) du procédé de préparation de l'invention, la phase solide formée de la zéolithe de type structural MTW est filtrée, lavée puis séchée. Le séchage est généralement réalisé à une température comprise entre 20 et 150°C, de préférence entre 70 et 120°C, pendant une durée comprise entre 5 et 20 heures. La zéolithe de type structural MTW, séchée, est généralement analysée par diffraction des rayons X, cette technique permettant également de déterminer la pureté de ladite zéolithe obtenue par le procédé de l'invention. De manière très avantageuse, le procédé de l'invention conduit à la formation d'une zéolithe de type structural MTW pure, en l'absence de toute autre phase cristallisée ou amorphe. Ladite zéolithe, après l'étape de séchage, est ensuite prête pour des étapes ultérieures telles que la calcination et l'échange d'ions. Pour ces étapes, toutes les méthodes conventionnelles connues de l'Homme du métier peuvent être employées.

La calcination de la zéolithe de type structural MTW obtenue selon le procédé de l'invention est préférentiellement réalisée à une température comprise entre 500 et 700°C et pendant une durée comprise entre 5 et 15 heures. La zéolithe de type structural MTW obtenue à l'issue de l'étape de calcination est dépourvue de toute espèce organique et en particulier de l'espèce organique azotée de formule (I).

En règle générale, le ou les cation(s) M de la zéolithe de type structural MTW obtenue par le procédé de l'invention, peu(ven)t être remplacé(s) par un ou des cation(s) quelconque de métaux et en particulier ceux des groupes IA, IB, IIA, IIB, IIIA, IIIB (y compris les terres rares), VIII (y compris les métaux nobles) de même que par le plomb, l'étain et le bismuth. L'échange est réalisé au moyen de sels hydrosolubles quelconques contenant le cation approprié.

Il est également avantageux d'obtenir la forme hydrogène de la zéolithe de type structural MTW obtenue selon le procédé de l'invention. Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe de type structural MTW en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

La zéolithe obtenue par le procédé de l'invention peut être utilisée après échange ionique comme solide acide pour la catalyse dans les domaines du raffinage et de la pétrochimie. Elle peut également être utilisée comme adsorbant pour le contrôle de la pollution ou comme tamis moléculaire pour la séparation.

Par exemple, lorsqu'elle est utilisée comme catalyseur, la zéolithe préparée selon le procédé de l'invention, est calcinée, échangée et est de préférence sous forme hydrogène, et peut être associée à une matrice inorganique, qui peut être inerte ou catalytiquement active, et à une phase métallique. La matrice inorganique peut être présente simplement comme liant pour maintenir ensemble les petites particules de la zéolithe sous les différentes formes connues des catalyseurs (extrudés, pastilles, billes, poudres), ou bien peut être ajoutée comme diluant pour imposer le degré de conversion dans un procédé qui progresserait sinon à une allure trop rapide conduisant à un encrassement du catalyseur en conséquence d'une formation importante de coke. Des matrices inorganiques typiques sont notamment des matières de support pour les catalyseurs comme la silice, les différentes formes d'alumine, la magnésie, la zircone, les oxydes de titane, de bore, de zirconium, les phosphates d'aluminium, de titane, les argiles kaoliniques, les bentonites, les montmorillonites, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active.

La zéolithe préparée selon le procédé de l'invention peut également être associée à au moins une autre zéolithe et jouer le rôle de phase active principale ou d'additif.

La phase métallique est introduite sur la zéolithe seule, la matrice inorganique seule ou l'ensemble matrice inorganique-zéolithe par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.
Les métaux peuvent être introduits soit tous de la même façon, soit par des techniques différentes, à tout moment de la préparation, avant ou après mise en forme et dans n'importe quel ordre. De plus, des traitements intermédiaires tels que par exemple une calcination et/ou une réduction peuvent être appliqués entre les dépôts des différents métaux
Les compositions catalytiques comportant la zéolithe de type structural MTW préparée selon le procédé de l'invention, conviennent de façon générale à la mise en oeuvre des principaux procédés de transformation d'hydrocarbures et des réactions de synthèse de composés organiques tels que les éthers.

Toute méthode de mise en forme connue de l'homme du métier convient pour le catalyseur comportant la zéolithe de type structural MTW. On pourra utiliser, par exemple, le pastillage ou l'extrusion ou la mise sous forme de billes. La mise en forme du catalyseur contenant la zéolithe préparée selon le procédé de l'invention et se présentant au moins en partie sous forme acide est généralement telle que le catalyseur est de préférence sous forme d'extrudés ou de billes en vue de son utilisation.

L'invention est illustrée par les exemples suivants qui ne présentent, en aucun cas, un caractère limitatif.

### Exemple 1 : préparation du dibromure de 1,10-bis(méthylpiperidinium)décane (structurant A1).

303 g de 1,10-dibromodécane (1,0 mole, 99%, Aldrich) sont ajoutés dans un ballon de 3 L contenant 600 ml d'éthanol et 248 g de N-méthylpiperidine (2,5 mole, 99%, Aldrich). Le milieu réactionnel est agité et porté à reflux pendant 12 h. Le mélange est ensuite refroidi à température ambiante puis filtré. Le filtrat est versé dans 900 ml de diéthyléther puis le précipité formé est filtré et lavé avec 300 ml de diéthyléther. Le solide obtenu est recristallisé dans un mélange éthanol/éther. Le solide obtenu est séché sous vide pendant 12 h. On obtient 297 g d'un solide blanc (soit un rendement de 60 %).
Le produit possède le spectre ¹H RMN attendu. ¹H RMN (D₂O, ppm/TMS) : 1,17 (12H,m) ; 1,46 (4H,quint) ; 1,55 (4H,m) ; 1,67 (8H,m) ; 2,83 (6H,s) ; 3,12 (4H,t) ; 3,15 (8H,t).

### Exemple 2 : préparation du dihydroxyde de 1,10-bis(méthylpiperidinium)décane (structurant A2).

17 g d'Ag₂O (0,07 mole, 99%, Aldrich) sont ajoutés dans un bécher en téflon de 250 ml contenant 30 g du structurant A1 (0,06 mole) et 100 ml d'eau déionisée. Le milieu réactionnel est agité à l'abri de la lumière pendant 12h. Le mélange est ensuite filtré. Le filtrat obtenu est composé d'une solution aqueuse de dihydroxyde de 1,10-bis(méthylpiperidinium)décane. Le dosage de cette espèce est réalisé par RMN du proton en utilisant l'acide formique en tant qu'étalon.

### Exemple 3 : préparation d'une zéolithe de type structural MTW silicique selon l'invention.

19,91 g d'une suspension colloïdale de silice, connue sous le terme commercial © Ludox AS-40 commercialisée par Aldrich, est incorporée dans une solution composée de 1,77 g de soude (Prolabo), 11,02 g du structurant A1 dans 67,30 g d'eau déionisée. La composition molaire du mélange est la suivante : SiO₂ : 0,17 Na₂O : 0,17 A1 : 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 1 jour à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 4 : préparation d'une zéolithe de type structural MTW silicique selon l'invention.

20,78 g d'une suspension colloïdale de silice, connue sous le terme commercial © Ludox AS-40 commercialisée par Aldrich, est incorporée dans une solution composée de 38,08 g d'une solution aqueuse de structurant A2 à 22,55 % massique et de 41,14 g d'eau déionisée. La composition molaire du mélange est la suivante : SiO₂ : 0,17 A2 : 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 7 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 5 : préparation d'une zéolithe de type structural MTW aluminosilicique selon l'invention.

20,76 g d'une suspension colloïdale de silice, connue sous le terme commercial © Ludox AS-40 commercialisée par Aldrich, est incorporée dans une solution composée de 38,06 g d'une solution aqueuse de structurant A2 à 22,55 % massique, de 0,090 g d'hydroxyde d'aluminum (Aldrich) et de 41,09 g d'eau déionisée. La composition molaire du mélange est la suivante : SiO₂ : 0,0042 Al₂O₃ : 0,17 A2 : 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 7 jours à 170°C sous agitation (500 trs/min. Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 6 : préparation d'une zéolithe de type structural MTW germanosilicique selon l'invention.

12,184 g d'une suspension colloïdale de silice, connue sous le terme commercial © Ludox AS-40 commercialisée par Aldrich, est incorporée dans une solution composée de 2,12 g d'oxyde de germanium amorphe (Aldrich), de 76,92 g d'une solution aqueuse de structurant A2 à 24,55 % massique, de 2,57 g d'une solution aqueuse de HF à 39,5 % massique et de 6,20 g d'eau déionisée. La composition molaire du mélange est la suivante : SiO₂ : 0,25 GeO₂ : 0,63 A2 : 0,63 HF : 50 H₂O. Le mélange est agité vigoureusement pendant une demi-heure. Le mélange est ensuite transféré, après homogénéisation, dans un autoclave de 150 mL en acier inoxydable. L'autoclave est chauffé pendant 14 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 7 : préparation d'une zéolithe de type structural MTW silicique selon l'invention.

15,37 g d'une suspension colloïdale de silice, connue sous le terme commercial © Ludox AS-40 commercialisée par Aldrich, est incorporée dans une solution composée de 76,78 g d'une solution aqueuse de structurant A2 à 24,82 % massique, de 2,59 g d'une solution aqueuse de HF à 39,5 % massique et de 5,26 g d'eau déionisée. La composition molaire du mélange est la suivante : SiO₂ : 0,50 A2 : 0,50 HF : 40 H₂O. Le mélange est agité vigoureusement pendant une demi-heure. Le mélange est ensuite transféré, après homogénéisation, dans un autoclave de 150 mL en acier inoxydable. L'autoclave est chauffé pendant 14 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 8 : préparation du dibromure de 1,9-bis(methylpiperidinium)nonane (structurant B1).

286 g de 1,9-dibromononane (1,0 mole, 99%, Aldrich) sont ajoutés dans un ballon de 3 L contenant 600 ml d'éthanol et 248 g de N-methylpiperidine (2,48 mole, 99%, Aldrich). Le milieu réactionnel est agité et porté à reflux pendant 12 h. Le mélange est ensuite refroidi à température ambiante puis filtré. Le filtrat est versé dans 900 ml de diéthyléther puis le précipité formé est filtré et lavé avec 300 ml de diéthyléther. Le solide obtenu est recristallisé dans un mélange éthanol/éther. Le solide obtenu est séché sous vide pendant 12 h. On obtient 265 g d'un solide blanc (soit un rendement de 55 %).
Le produit possède le spectre ¹H RMN attendu. ¹H RMN (D₂O, ppm/TMS) : 1,22 (10H,m) ; 1,50 (4H,quint) ; 1,60 (4H,m) ; 1,72 (8H,m) ; 2,87 (6H,s) ; 3,17 (4H,t) ; 3,18 (8H,t).

### Exemple 9 : préparation du dihydroxyde de 1,9-bis(methylpiperidinium)nonane (structurant B2).

17 g d'Ag₂0 (0,07 mole, 99%, Aldrich) sont ajoutés dans un bécher en téflon de 250 ml contenant 30 g du structurant B1 (0,06 mole) et 100 ml d'eau déionisée. Le milieu réactionnel est agité à l'abri de la lumière pendant 12h. Le mélange est ensuite filtré. Le filtrat obtenu est composé d'une solution aqueuse de dihydroxyde de 1,9-bis(methylpiperidinium)nonane. Le dosage de cette espèce est réalisé par RMN du proton en utilisant l'acide formique en tant qu'étalon.

### Exemple 10 : préparation d'une zéolithe de type structural MTW silicique selon l'invention.

19,97 g d'une suspension colloïdale de silice, connue sous le terme commercial © Ludox AS-40 commercialisée par Aldrich, est incorporée dans une solution composée de 1,78 g de soude (Prolabo), 10,74 g du structurant B1 dans 67,51 g d'eau déionisée. La composition molaire du mélange est la suivante : SiO₂ : 0,17 Na₂O : 0,17 B1 : 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 3 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 11 : préparation d'une zéolithe de type structural MTW germanosilicique selon l'invention.

12,60 g d'une suspension colloïdal de silice, connue sous le terme commercial © Ludox AS-40 commercialisée par Aldrich, est incorporée dans une solution composée de 0,98 g d'oxyde de germanium amorphe (Aldrich), de 45,28 g d'une solution aqueuse de structurant B2 à 22,15 % massique et de 41,19 g d'eau déionisée. La composition molaire du mélange est la suivante : SiO₂ : 0,11 GeO₂ : 0,33 B2 : 56 H₂O. Le mélange est agité vigoureusement pendant une demi-heure. Le mélange est ensuite transféré, après homogénéisation, dans un autoclave de 150 mL en acier inoxydable. L'autoclave est chauffé pendant 3 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 12: préparation du dibromure de 1,7-bis(methylpiperidinium)heptane (structurant C1).

100 g de 1,7-dibromoheptane (0,39 mole, 99%, Aldrich) sont ajoutés dans un ballon de 1 L contenant 200 ml d'éthanol et 96 g de N-methylpiperidine (0,97 mole, 99%, Aldrich). Le milieu réactionnel est agité et porté à reflux pendant 12 h. Le mélange est ensuite refroidi à température ambiante puis filtré. Le filtrat est versé dans 300 mi de diéthyléther puis le précipité formé est filtré et lavé avec 100 ml de diéthyléther. Le solide obtenu est recristallisé dans un mélange éthanol/éther. Le solide obtenu est séché sous vide pendant 12 h. On obtient 98 g d'un solide blanc (soit un rendement de 45 %).
Le produit possède le spectre ¹H RMN attendu. ¹H RMN (D₂O, ppm/TMS) : 1,25 (6H,m) ; 1,48 (4H,quint) ; 1,60 (4H,m) ; 1,71 (8H,m) ; 2,86 (6H,s) ; 3,16 (4H,t) ; 3,17 (8H,t).

### Exemple 13 : préparation du dihydroxyde de 1,7-bis(methylpiperidinium)heptane (structurant C2).

18 g d'Ag₂O (0,08 mole, 99%, Aldrich) sont ajoutés dans un bécher en téflon de 250 ml contenant 30 g du structurant C1 (0,07 mole) et 100 ml d'eau déionisée. Le milieu réactionnel est agité à l'abri de la lumière pendant 12h. Le mélange est ensuite filtré. Le filtrat obtenu est composé d'une solution aqueuse de dihydroxyde de 1,7-bis(méthylpiperidinium)heptane. Le dosage de cette espèce est réalisé par RMN du proton en utilisant l'acide formique en tant qu'étalon.

### Exemple 14 : préparation d'une zéolithe de type structural MTW silicique selon l'invention.

17,34 g d'une suspension colloïdale de silice, connue sous le terme commercial © Ludox AS-40 commercialisée par Aldrich, est incorporée dans une solution composée de 77,76 g d'une solution aqueuse de structurant C2 à 24,53 % massique, de 2,93 g d'une solution aqueuse de HF à 39,5 % massique et de 1,97 g d'eau déionisée. La composition molaire du mélange est la suivante : SiO₂ ; 0,50 C2 ; 0,50 HF ; 35 H₂O. Le mélange est agité vigoureusement pendant une demi-heure. Le mélange est ensuite transféré, après homogénéisation, dans un autoclave de 150 mL en acier inoxydable. L'autoclave est chauffé pendant 3 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 15 : préparation d'une zéolithe de type structural MTW germanosilicique selon l'invention.

15,53 g d'une suspension colloïdale de silice, connue sous le terme commercial © Ludox AS-40 commercialisée par Aldrich, est incorporée dans une solution composée de 1,20 g d'oxyde de germanium amorphe (Aldrich), de 77,36 g d'une solution aqueuse de structurant C2 à 24,43 % massique et de 3,00 g d'eau déionisée. La composition molaire du mélange est la suivante : SiO₂ ; 0,11 GeO₂ ; 0,56 C2 ; 39 H₂O. Le mélange est agité vigoureusement pendant une demi-heure. Le mélange est ensuite transféré, après homogénéisation, dans un autoclave de 150 mL en acier inoxydable. L'autoclave est chauffé pendant 3 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MTW pure.

### Exemple 16 : préparation d'un catalyseur comprenant une zéolithe de type structural MTW synthétisée dans le système aluminosilicate

La zéolithe utilisée dans cet exemple est la zéolithe de type structural MTW brute de synthèse obtenue dans le système Si/Al de l'exemple 5.
Cette zéolithe de type structural MTW subit tout d'abord une calcination dite sèche à 550°C sous flux d'air durant 8 heures de manière à éliminer l'espèce structurante organique azotée A2. Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 heures sous air et calcinés à 550°C pendant 2 heures sous flux d'air dans un four à moufle. Ils constituent le support du catalyseur.
Du platine est déposé sur l'alumine de ce support par échange anionique avec de l'acide hexachloroplatinique en présence d'un agent compétiteur (acide chlorhydrique). Le support échangé est ensuite séché à 120°C pendant 12 heures sous air et calciné à 550°C sous débit d'air sec pendant 1 heure.
Le catalyseur ainsi préparé est composé en teneur pondérale de 50% de zéolithe de type structural MTW forme hydrogène, de 49,8 % d'alumine et de 0,2% de platine.

## Revendications

1. Procédé de préparation d'une zéolithe de type structural MTW comprenant au moins les étapes suivantes :
i) le mélange, en milieu aqueux, d'au moins une source d'au moins un élément tétravalent X et d'au moins une espèce organique azotée de formule (I) indiquée ci-dessous : 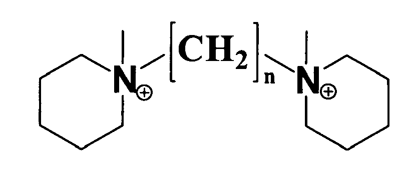 dans laquelle n représente le nombre de motif méthylène (CH₂) et est égal à 7, 8, 9 ou 10,
ii) le traitement hydrothermal dudit mélange jusqu'à ce que ladite zéolithe de type structural MTW se forme.

2. Procédé de préparation selon la revendication 1 tel que ladite espèce organique azotée de formule (I) est choisie parmi le 1,10-bis(méthylpiperidinium)décane, le 1,9-bis(méthylpiperidinium)nonane et le 1,7-bis(méthylpiperidinium)heptane.

3. Procédé de préparation selon la revendication 1 ou la revendication 2 tel que l'élément tétravalent X est choisi parmi le silicium, le titane, le germanium et le mélange d'au moins deux de ces éléments tétravalents.

4. Procédé de préparation selon la revendication 3 tel que l'élément X est le silicium ou un mélange de silicium et de germanium.

5. Procédé de préparation selon l'une des revendications 1 à 4 tel qu'au moins une source d'au moins un élément trivalent Y est incorporée dans le mélange pour la mise en oeuvre de ladite étape i).

6. Procédé de préparation selon la revendication 5 tel que ledit élément Y est l'aluminium.

7. Procédé de préparation selon l'une des revendications 1 à 6 tel qu'au moins un métal alcalin et/ou alcalino-terreux M est incorporé dans le mélange pour la mise en oeuvre de ladite étape i).

8. Procédé de préparation selon la revendication 7 tel que ledit métal M est le sodium.

9. Procédé de préparation selon l'une des revendications 1 à 8 tel que l'anion fluorure est incorporé dans le mélange pour la mise en oeuvre de ladite étape i).

10. Procédé de préparation selon l'une des revendications 1 à 9 tel que le mélange réactionnel obtenu à l'étape (i) présente une composition molaire exprimée par la formule XO₂ : v YO_{b} : w M_{2/m}O : x F⁻ : y H₂O : z R⁺ , dans laquelle v est compris entre 0 et 0,5, w est compris entre 0 et 1, x est compris entre 0 et 1, y est compris entre 1 et 200, z est compris entre 0,04 et 2, b est compris entre 1 et 3 (b étant un nombre entier ou rationnel), m est égal à 1 ou 2, R⁺ étant l'espèce organique cationique azotée de formule (I), v, w, x, y et z représentant respectivement le nombre de moles de YO_{b}, de M_{2/m}O, de F⁻, de H₂O et de R⁺.

11. Procédé de préparation selon l'une des revendications 1 à 10 tel que des germes sont additionnés au mélange réactionnel au cours de ladite étape i).

12. Procédé de préparation selon l'une des revendications 1 à 11 tel que ledit traitement hydrothermal selon ladite étape ii) est réalisé à une température comprise entre 80 et 200°C.

13. Procédé de préparation selon l'une des revendications 1 à 12 tel que la phase solide formée de la zéolithe de type structural MTW est filtrée, lavée puis séchée.
